# EUROPEAN PATENT APPLICATION

(11) **EP 3 949 792 A1**
(43) Date of publication of application: **09.02.2022**
(21) Application number: 21190132.7
(22) Date of filing: 06.08.2021
(51) Int. Cl.: A44B 19/34, A44B 19/56, B62D 1/06

(54) **KNITTED FASTENER STRINGER AND COVER MEMBER**

(30) Priority: 07.08.2020 JP 2020135206
(71) Applicant: YKK Corporation, Tokyo 101-8642 (JP)
(72) Inventor: UOZUMI, Norio, Toyama, 9388601 (JP); AMANO, Masanori, Toyama, 9388601 (JP); MEIWA, Masaki, Toyama, 9388601 (JP); KIDO, Shono, Tokyo, 1018642 (JP)
(74) Representative: Sevinç, Erkan

(57) **Abstract**

A knitted fastener stringer (20) of the invention includes: a fastener tape (23); and a continuous element row (21) which is fixed upon knitting the fastener tape (23), the fastener tape (23) has a tape main body portion (24) and an element attachment portion (25), the tape main body portion (24) has a first region (31) which neighbors the element attachment portion (25), a second region (32) which neighbors the first region (31), and a third region (33) which neighbors the second region (32) and forms an outermost side edge portion, the second region (32) is formed thinner than the first region (31), and the third region (33) is formed thinner than the second region (32).

## Description

### BACKGROUND

### Technical Field

The invention relates to a knitted fastener stringer and a cover member.

### Related Art

A cover member (wheel cover) is attached to a ring-shaped rim portion of a steering wheel. Conventionally, although the attachment of the cover member is conducted by utilizing hand-sewing or the like, not only is attachment work by the hand-sewing complex but also the work requires a long time. In addition, a finish condition after attaching the cover member easily depends on a technique of a worker, and it is likely to cause variation in quality of the steering wheel.

On the other hand, for example, in International Publication WO2017094155, a cover attachment structure in which a fastener member is used to attach a sheet-like cover member to a surface of a base body is disclosed. In this International Publication WO2017094155, as one of application examples of the cover attachment structure, a cover member attached to a steering wheel is described.

For example, as illustrated in FIG. 7, in the cover attachment structure described in International Publication WO2017094155, a fastener member 70 has a first element row 71 including a plurality of fastener elements 73 and a second element row 72 including a plurality of fastener elements 73, and the first element row 71 and the second element row 72 are provided in such a way as to face one side edge portion and the other side edge portion of a cover member 80. In addition, on a surface of a rim main body portion 82 of a rim portion 81 to which the cover member 80 is attached, a recessed groove 83 which houses the first element row 71 and the second element row 72 which are coupled to each other is provided.

In a case where the cover attachment structure in International Publication WO2017094155 is applied to the cover member 80 of the steering wheel, the first element row 71 and the second element row 72 can be coupled to each other by inserting the first element row 71 and the second element row 72 into the recessed groove 83 of the rim main body portion 82. Thus, one side edge portion and the other side edge portion of the cover member 80 are closed, the cover member 80 can be attached to the rim main body portion 82 of the steering wheel, and the rim main body portion 82 can be thereby formed. Furthermore, since the coupled first element row 71 and second element row 72 are inserted into the recessed groove 83 and are locked, the cover member 80 can be fixed to the rim main body portion 82.

As described above, by utilizing the cover attachment structure disclosed in International Publication WO2017094155 to attach the cover member 80, it is made possible to easily conduct the attachment work of the cover member 80 and the attachment work can be made efficient, as compared with, for example, a case where the attachment work is conducted by utilizing the above-described hand-sewing. In addition, the attachment work of the cover member 80 is hardly influenced by experience, a degree of proficiency, and the like, and advantages such as a reduction in costs and stabilization of quality can be expected.

### SUMMARY

In a case where a cover member is attached to a rim portion of a steering wheel by utilizing the cover attachment structure disclosed in International Publication WO2017094155, fastener tapes of a fastener member are retained between the cover member and a rim main body portion of a rim portion. However, in this case, a thickness of each of the fastener tapes comes to easily float up on a surface of the cover member, and as a result, there is a case where a recessed and projected shape such as a step difference caused by each of the fastener tapes is formed an external surface of the cover member.

In addition, the rim portion of the steering wheel curves in a circular manner in general and has a configuration in which a cross section of the rim portion orthogonal to a circumferential direction is of a substantially circular shape. Thus, an external surface of the rim main body portion of the rim portion is formed into a curved surface which is complexly curved. Accordingly, in the case where the cover member is attached to the rim portion of the steering wheel by using the fastener member, a part of the fastener member (in particular, a tape side edge portion on a side on which the element row of each of the fastener tapes is not attached) cannot be appropriately fitted along the external surface of the rim main body portion which is complexly curved. Thus, there may be cases where between the cover member and the rim main body portion of the fastener member comes to easily float up from the rim main body portion and where creases are caused in the fastener tape.

As a result, the recessed and projected shape is further easily formed on the external surface of the cover member. As described above, in a case where the recessed and projected shape is formed on the external surface of the cover member, there may be cases where appearance (quality of appearance) of the steering wheel is reduced and where influence is exerted on touch (hand feeling) upon holding the steering wheel.

In view of the above-described conventional problems, the invention has been devised, and the objects are to provide a knitted fastener stringer which allows work of attaching a cover member to a steering wheel to be easily conducted and enables influence exerted on appearance and touch of the steering wheel to be decreased and a cover member for a steering wheel, to which the knitted fastener stringer is attached.

In order to achieve the above-described objects, a knitted fastener stringer provided by the invention includes: a fastener tape which is formed by a knitting structure; and a continuous element row which is fixed upon knitting the fastener tape, the fastener tape has a tape main body portion and an element attachment portion which extends in a tape width direction from a side edge of the tape main body portion and in which the continuous element row is fixed, the tape main body portion has, in the tape width direction, a first region which neighbors the element attachment portion, a second region which neighbors the first region, and a third region which neighbors the second region and forms a side edge portion on a side opposite to a side of the element attachment portion of the tape main body portion, the second region is formed thinner than the first region, and the third region is formed thinner than the second region.

In the knitted fastener stringer according to the invention, it is preferable that a dimension of the first region in the tape width direction is equal to or less than a half of a dimension of a whole of the tape main body portion in the tape width direction.

In addition, it is preferable that a dimension of the second region in the tape width direction is equal to or less than the dimension of the first region in the tape width direction.

Furthermore, it is preferable that a dimension of a whole of the fastener tape in the tape width direction is equal to or less than 400% of a dimension of each of fastener elements forming the continuous element row in the tape width direction.

In the knitted fastener stringer of the invention, it is preferable that each of wales which form the second region has one needle loop of a knitting yarn in each of courses, each of wales which form the first region is formed in such a way that a number of needle loops of the knitting yarn of each wale is larger than a number of the needle loops of each of the wales which form the second region, and a wale which forms the third region is formed in such a way that a number of needle loops of the knitting yarn of the wales is smaller than the number of the needle loops of each of the wales which form the second region.

In addition, it is preferable that the first region is formed by the wales having needle loops of a chain knitting yarn and needle loops of a tricot knitting yarn, the second region is formed by the wales having needle loops of the tricot knitting yarn in each of the courses, and the third region is formed by the wale, in which courses in which only needle loops of the tricot knitting yarn are provided and courses in which only folded-back parts of a weft in-laid yarn are provided are alternately located.

Next, a cover member provided by the invention is a cover member in which the knitted fastener stringers, each of which has the above-described configuration, are attached along facing edge portions facing each other upon attaching the cover member to a steering wheel.

In the cover member of the invention, it is preferable that the first region of each of a pair of the knitted fastener stringers is sewn by a sewing portion in a state in which the first region of each of the pair of the knitted fastener stringers and each of the facing edge portions facing each other of the cover member are superposed respectively, the facing edge portions are abutted by closing the pair of the knitted fastener stringers, and stitches are provided in such a way as to overstride the abutted facing edge portions.

According to the invention, knitted fastener stringers which allow work of attaching a cover member to a steering wheel to be easily conducted and enable influence exerted on appearance and touch of the steering wheel to be decreased and a cover member for a steering wheel to which the knitted fastener stringers are attached can be provided.

### BRIEF DESCRIPTION OF DRAWINGS

FIG. 1 is a perspective view schematically illustrating a principal part of a steering wheel to which a cover member according to an embodiment of the invention is attached;
FIG. 2 is a schematic cross-sectional view schematically illustrating a part of a cross section which is orthogonal to a circumferential direction of the steering wheel illustrated in FIG. 1;
FIG. 3 is a bottom view schematically illustrating a slide fastener attached to the cover member;
FIG. 4 is a structural view illustrating a knitting structure of a fastener tape of a knitted fastener stringer in the slide fastener illustrated in FIG. 2;
FIG. 5 is a structural view of each of yarns used in the knitted fastener stringer;
FIG. 6 is a schematic cross-sectional view schematically illustrating a part of a cross section of a steering wheel to which a cover member according to a modified example is attached; and
FIG. 7 is a perspective view illustrating a part of a steering wheel to which the conventional cover member is attached.

### DETAILED DESCRIPTION

Hereinafter, a preferred embodiment of the invention will be described by citing examples with reference to the accompanying drawings.

### Embodiment

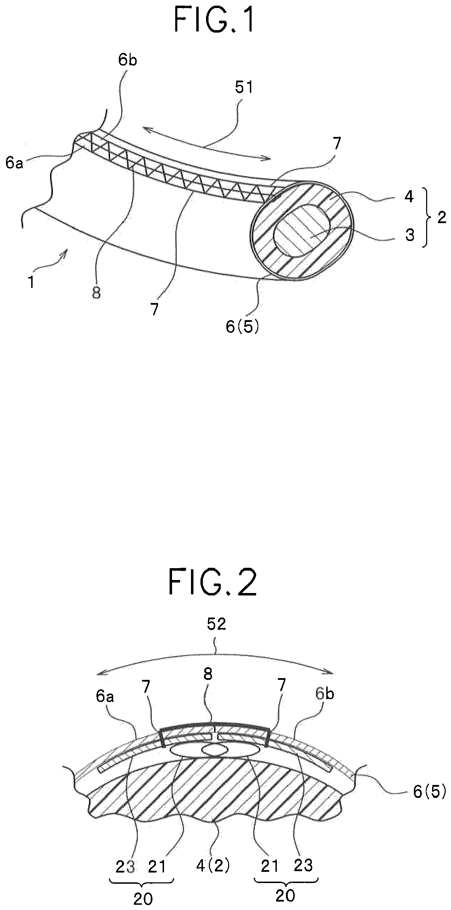

FIG. 1 is a perspective view schematically illustrating a principal part of a steering wheel to which a cover member according to the present embodiment is attached. FIG. 2 is a schematic cross-sectional view schematically illustrating a part of a cross section which is orthogonal to a circumferential direction of the steering wheel illustrated in FIG. 1. Note that in FIG. 2, continuous element rows are illustrated in a simplified manner.

In addition, in the description below as to a slide fastener and a knitted fastener stringer, a front-back direction refers to a sliding direction of a slider and in particular, a direction in which the slider is moved to couple the element rows of the slide fastener (a direction in which the slide fastener is closed) is a forward direction and a direction in which the slider is moved to separate the element rows is a backward direction (a direction in which the slide fastener is opened).

A right-left direction refers to a width direction of a fastener tape upon flatly holding the fastener tape of the slide fastener, and also refers to a direction orthogonal to the front-back direction and in parallel with a tape front surface and a tape rear surface of the fastener tape. An up-down direction refers to a direction which is orthogonal to the tape front surface and the tape rear surface of the fastener tape and is a direction which is orthogonal to the front-back direction and to the right-left direction. In this case, a direction which faces outward when the slide fastener is used (when the slide fastener is applied to the cover member) or a direction of a side on which a pulling handle or an operation portion of the slider is provided for the fastener tape is an up direction and a direction on a side opposite to the up direction is a down direction.

In the present embodiment, the steering wheel 1, for example, in a front view of the steering wheel 1, has: a ring-shaped rim portion 2 which an operator holds; a boss portion, not illustrated, which is located in a central portion of the rim portion 2; and a plurality of spoke portions, not illustrated, which connects the rim portion 2 and the boss portion. Note that in the invention, it is only required for the steering wheel to have the ring-shaped rim portion to which the cover member 5 is attached, and a shape and a configuration of the steering wheel are not particularly limited.

The rim portion 2 of the steering wheel 1, as illustrated in FIG. 1, has: a metallic core portion 3; a rim main body portion 4 which enfolds the core portion 3 and is formed of synthetic resin such as urethane; and a cover member 5 which covers the rim main body portion 4 (the cover member 5 is also referred to as a wheel cover or a skin member). Note that in the present embodiment, in the rim main body portion 4 of the rim portion 2, a recessed groove-shaped housing groove portion which can house at least a part of the continuous element rows 21 of the later-described slide fastener 10, which are coupled, may be provided in a recessed manner along a circumferential direction of the rim main body portion 4.

The cover member 5 in the present embodiment has at least a cover main body portion 6 having a slender shape, and the cover main body portion 6 is formed to be capable of covering an external surface (external peripheral surface) of the rim main body portion 4 along a circumferential direction of the rim portion 2 and enfolding the rim main body portion 4. In addition, the cover main body portion 6 has a first side edge portion (first facing side edge portion) 6a and a second side edge portion (second facing side edge portion) 6b which are provided along the circumferential direction of the rim portion 2 and face each other. Note that in the invention, a material and a shape of the cover member are not particularly limited and any material and any shape can be selected in accordance with a configuration and the like of the steering wheel 1 to which the cover member 5 is attached.

The later-described pair of right and left knitted fastener stringers 20 of the slide fastener 10 are attached to the first side edge portion 6a and the second side edge portion 6b of the cover main body portion 6 by sewing portions 7 of sewing threads. By sliding the later-described slider 11 of the slide fastener 10 to couple the continuous element rows 21 to each other, which are provided for the right and left knitted fastener stringers 20, while the cover main body portion 6 is being wound to the rim main body portion 4, as described later, the cover member 5 in the present embodiment is attached to the rim main body portion 4 of the steering wheel 1 in a state in which the first side edge portion 6a and the second side edge portion 6b of the cover main body portion 6 abutted each other. In addition, in the present embodiment, after attaching the cover main body portion 6 to the rim main body portion 4, the later-described zigzag stitches 8 (also referred to as Euro-stitch) are formed in an internal peripheral part of the rim portion 2 along the abutted first side edge portion 6a and second side edge portion 6b of the cover main body portion 6.

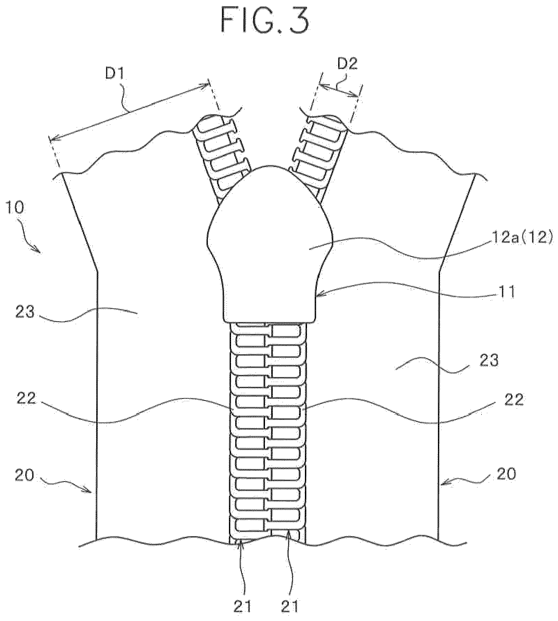

As illustrated in FIG. 3, the slide fastener 10 in the present embodiment has the pair of right and left knitted fastener stringers 20 for which the continuous element rows 21 are provided and the slider 11 which can slide along the right and left continuous element rows 21. This slide fastener 10 is attached to the cover main body portion 6 in such a way that the continuous element rows 21 are located on a side of the rim main body portion 4 further than a ground texture of each of the later-described fastener tapes 23 with respect to the cover member 5, as illustrated in FIG. 2. In other words, the slide fastener 10 in the present embodiment is formed as the so-called back side use type slide fastener in which the continuous element rows 21 are located on a back surface side of the fastener tapes 23 upon coupling the right and left continuous element rows 21.

The slider 11 in the present embodiment is formed as a slider for the back side use type. Specifically, the slider 11 has a slider body 12 and a pulling handle, not illustrated, which is attached to the slider body 12.

Although detailed illustration of the slider body 12 is omitted, the slider body 12 has: an upper blade; a lower blade 12a which is located in a position spaced apart from the upper blade and faces the upper blade; a connecting column which connects front end parts (shoulder opening side end parts) of the upper blade and the lower blade 12a; right and left lower flange portions which are provided in right and left side edge portions of the lower blade 12a; and a pulling handle attachment column which is provided on an upper surface of the upper blade and to which the pulling handle is attached. In the front end parts of the slider body 12, shoulder openings are formed on right and left sides in such a way as to sandwich the connecting column therebetween. In a rear end part of the slider body 12, a rear opening is formed. Between the upper blade and the lower blade 12a of the slider body 12, a Y-shaped element guide passage which makes the right and left shoulder openings and one rear opening communicate with each other is formed.

Each of the right and left knitted fastener stringers 20 in the present embodiment has the fastener tape 23 which is formed by using a plurality of knitting yarns and the continuous element row 21 which is fixed to a part of the fastener tape 23 when the fastener tape 23 is knitted. When the fastener tape 23 is knitted, the continuous element rows 21 are formed by inserting each of a plurality of continuous fastener elements 22 into a part of the fastener tape 23 one by one and fixing the continuous fastener elements 22 by a part of knitting yarns (the later-described fixing chain knitting yarn 43) by which the fastener tapes 23 are formed.

The plurality of fastener elements 22 are formed by forming monofilaments formed of synthetic resin such as polyamide and polyester into coil-like shape. In addition, each of the fastener elements 22 has a coupling head 22a; an upper leg portion and a lower leg portion which extend from the coupling head 22a in a tape width direction; and a connecting portion (also referred to as a reversing portion) with which connects the upper leg portion (or the lower leg portion) of its fastener element 22 and the lower leg portion (or the upper leg portion) of the next fastener element 22 which neighbors the aforementioned fastener element 22. In this case, the upper leg portion of each of the fastener elements 22 is located in such a way as to contact the ground texture of the fastener tape 23 and the lower leg portion is pressed down toward the ground texture by sinker loops of the fixing chain knitting yarn 43. In addition, the fastener elements 22 are fixed to the fastener tape 23 to project the coupling head 22a of each of the fastener elements from one of tape side edges of the fastener tape 23 in the tape width direction.

In the slide fastener 10 in the present embodiment, a dimension in the up-down direction from an upper surface (external surface) of the fastener tape 23 to a lower surface of the lower leg portion of each of the fastener elements 22 in a state in which the right and left knitted fastener stringers 20 are coupled to each other is smaller than that in, for example, the conventional general back side use type slide fastener. Note that the above-described dimension in the up-down direction in the state in which the right and left knitted fastener stringers 20 are coupled to each other is also referred to as a chain thickness.

By making the chain thickness in the slide fastener 10 small as described above, as illustrated in FIGS. 1 and 2, when the cover member 5 is attached to the rim main body portion 4 of the steering wheel 1, the cover member 5 can be inhibited from floating up from the rim main body portion 4, the floating-up being attributable to the thickness of the coupled right and left continuous element rows 21. Thus, it is made possible to enhance quality of appearance of the steering wheel 1 to which the cover member 5 is attached and to make touch felt when the steering wheel 1 is held fine. In a case of the present embodiment, the above-described chain thickness in the slide fastener 10 is 1.4 mm ± 0.05 mm.

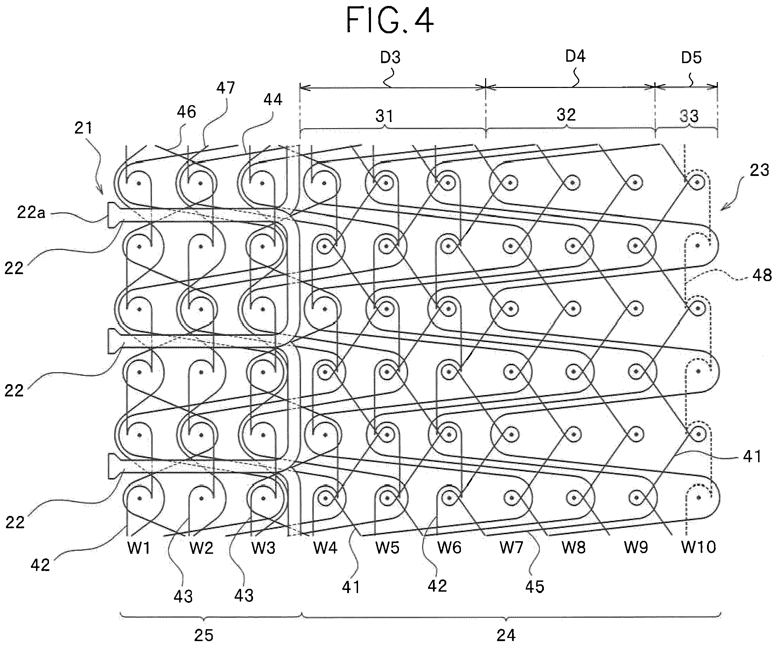

As illustrated in FIG. 4, each of the fastener tapes 23 is formed by a warp knitted tape which is knitted and formed by a plurality of knitting yarns and a plurality of weft in-laid yarns. Each of the fastener tapes 23 has a tape main body portion 24 and an element attachment portion 25 which extends in the tape width direction from one side edge of the tape main body portion 24. Each of the continuous element rows 21 is knitted into and fixed to the element attachment portion 25 of each of the fastener tapes 23.

Each of the fastener tapes 23 in the present embodiment has 10 wales formed in the tape width direction. In this case, in each of the fastener tapes 23, a wale which is provided closest to the coupled partner of the knitted fastener stringers 20 and is formed in one side edge portion of the fastener tape 23 is defined as a first wale W1 and wales placed from a wale neighboring the first wale W1 to a wale which is formed in the other side edge portion of the fastener tape 23 (a wale which is provided most distant from the coupling partner of the knitted fastener stringers 20) are defined as a second wale W2 to a tenth wale W10 in order.

In this case, the element attachment portion 25 of each of the fastener tapes 23 is formed by three wales, which are the first wale W1 to the third wale W3. The tape main body portion 24 is formed by seven wales, which are the fourth wale W4 to the tenth wale W10. Note that in the description below, the other side edge portion of each of the fastener tapes 23, that is, the tape side edge portion on a side, which is located in such a way as to be spaced apart from the continuous element row 21 of the fastener tape 23 is also referred to as an outermost side edge portion.

The tape main body portion 24 has three regions which are a first region 31, a second region 32, and a third region 33 and are formed in such a way as to have thicknesses which are different from one another. In addition, in the tape main body portion 24, the first region 31, the second region 32, and the third region 33 are formed thin in a manner stepwise in this order in a direction distant from the element attachment portion 25.

The first region 31 of the tape main body portion 24 is a part which is fixed to the cover main body portion 6 by the sewing portions 7 when the knitted fastener stringers 20 are attached to the cover main body portion 6 of the cover member 5 by sewing, and the sewing threads of the sewing portions 7 are pierced to the first region 31. This first region 31 is provided in such a way as to neighbor the element attachment portion 25 and is formed over three wales which are the fourth wale W4 to the sixth wale W6.

With respect to the tape main body portion 24, the above-described first region 31 is formed narrowly in such a way that a dimension of the first region 31 in the tape width direction (hereinafter, referred to as a width dimension) is made small to be equal to or less than a half of a width dimension (dimension in the tape width direction) of the whole tape main body portion 24.

Note that in the invention, although the number of wales (wale number) by which the first region 31 is formed is not limited, it is preferable that the number of wales of the first region 31 is two or more and five or less (in particular, three). The first region 31 is formed by two or more wales, thereby allowing the width dimension of the first region 31 to be appropriately ensured. Thus, the sewing portion 7 which fix the knitted fastener stringer 20 to the cover main body portion 6 can be stably formed within the first region 31. In addition, when a lateral pulling force which pulls the right and left knitted fastener stringers 20 toward an outside in the width direction is applied on the slide fastener 10, it is made possible to hardly cause the sewing portions 7 to fall off from the first region 31. Furthermore, the wale number of the first region 31 is two or more, thereby allowing stretchability of the knitted fastener stringer 20 in the front-back direction to be appropriately controlled, so that stability upon knitting the knitted fastener stringer 20 can be enhanced.

On the other hand, the wale number of the first region 31 is five or less, thereby allowing the fastener tapes 23 to be easily formed narrowly. Thus, when the cover member 5 to which the slide fastener 10 is attached is attached to the rim main body portion 4 of the steering wheel 1, the slide fastener 10 (in particular, the fastener tapes 23) can be made to be easily fitted along a complex curved external surface of the rim main body portion 4. Thus, it is made possible to hardly cause creases and bending of the fastener tapes 23, floating-up of the cover member 5 and the like.

The second region 32 of the tape main body portion 24 neighbors the first region 31 and is formed over three wales which are a seventh wale W7 to a ninth wale W9. The above-described second region 32 is provided, thereby allowing a thickness of the fastener tape 23 to be formed thin in a stepwise manner in the tape width direction. Thus, for example, when the cover member 5 is attached to the rim main body portion 4 of the steering wheel 1, a step difference which is attributable to change in the thickness of the fastener tape 23 can be inhibited from being formed on a surface of the cover member 5. In addition, the second region 32 is provided, thereby allowing the first region 31 of the tape main body portion 24 to be pressed by the second region 32 from the width direction when the above-described lateral pulling force is applied on the slide fastener 10 and thus enabling the falling-off of the sewing portions 7 from the first region 31 to be further hardly caused.

In this case, it is preferable that a width dimension of the second region 32 is equal to or less than the width dimension of the first region 31. Thus, the fastener tapes 23 can be formed narrowly. Furthermore, it is preferable that the width dimension of the second region 32 is 50% or more of the width dimension of the first region 31. Thus, the fastener tapes 23 can have appropriate stretchability.

In addition, specifically, it is preferable that the second region 32 is formed by the wales whose number is the same as or smaller than that of the wales in the first region 31. For example, it is preferable that the number of the wales of the second region 32 is two or more and five or less. The second region 32 has the two or more wales, thereby allowing the second region 32 to be stably formed. The second region 32 has the five or less wales, thereby allowing the fastener tapes 23 to be formed narrowly.

The third region 33 of the tape main body portion 24 is located in such a way as to neighbor the second region 32. By this third region 33, a tape side edge portion (outermost side edge portion) on a side opposite to a side of the element attachment portion 25 of the tape main body portion 24 is formed. In addition, the third region 33 is formed only by a tenth wale W10.

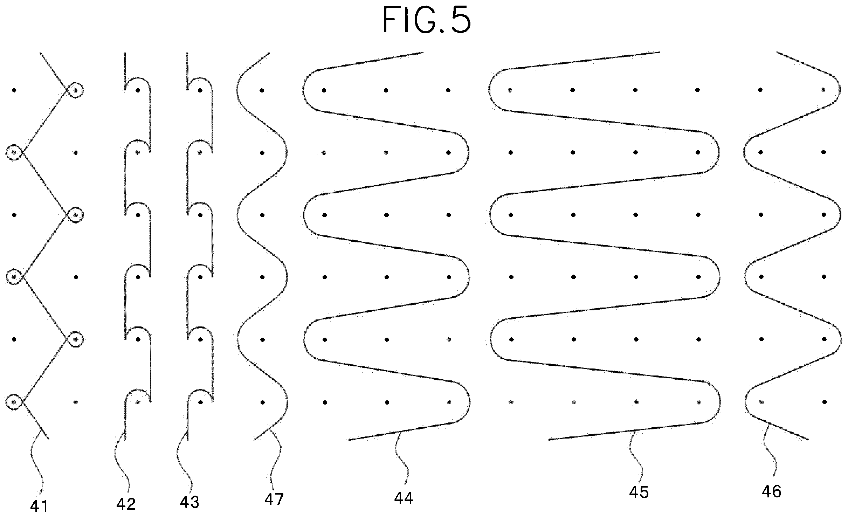

As illustrated in FIGS. 4 and 5, the tape main body portion 24 in the present embodiment is knitted by using a tricot knitting yarn 41 (1-0/1-2), a chain knitting yarn 42 (0-1/1-0), a first forward weft in-laid yarn 44 (3-3/0-0) which is laid in over three wales in a zigzag manner, a second forward weft in-laid yarn 45 (4-4/0-0) which is laid in over four wales in a zigzag manner, a reverse weft in-laid yarn 46 (0-0/2-2) which is laid in over two wales in a zigzag manner, and a water-soluble temporary chain knitting yarn 48 (0-1/1-0) indicated by a broken line in the tenth wale W10. The knitting structure (ground texture) of the tape main body portion 24 is formed by these yarns. In this case, the reverse weft in-laid yarn 46 is laid in a direction which intersects the first forward weft in-laid yarn 44 between two courses neighboring a wale direction.

Hereinafter, the knitting structure (ground texture) of the tape main body portion 24 will be further specifically described. In the first region 31 (the fourth wale W4 to the sixth wale W6) of the tape main body portion 24, the tricot knitting yarn 41, the chain knitting yarn 42, the first forward weft in-laid yarn 44, the second forward weft in-laid yarn 45, and the reverse weft in-laid yarn 46 are disposed.

Each of the fourth wale W4 to the sixth wale W6 has two kinds of needle loops which are needle loops of the tricot knitting yarn 41 and needle loops of the chain knitting yarn 42. In particular, in each of the fifth wale W5 and the sixth wale W6, the needle loops of the tricot knitting yarn 41 and the needle loops of the chain knitting yarn 42 are formed (interlaced) in each of the courses. Thus, a thickness (a dimension in a tape front-back direction) of the first region 31 can be stably increased. In addition, a width dimension of the first region 31 can be made larger than a width dimension of the second region 32 which does not include the chain knitting yarn 42 (in other words, the second region 32 can be formed narrower than the first region 31).

In addition, the reverse weft in-laid yarn 46 which is laid in the first region 31 intersects the needle loops of the chain knitting yarn 42 on the fourth wale W4 and intersects needle loops of the later-described fixing chain knitting yarn 43 on the third wale W3. Thus, a tape strength between the tape main body portion 24 and the element attachment portion 25 is enhanced.

The second region 32 (the seventh wale W7 to the ninth wale W9) of the tape main body portion 24 is formed by using two kinds of yarns which are the tricot knitting yarn 41 and the second forward weft in-laid yarn 45. Thus, each of the wales of the seventh wale W7 to the ninth wale W9 is provided with one needle loop of the tricot knitting yarn 41 in each course. Thus, a thickness of the second region 32 is decreased to be smaller than the above-described thickness of the first region 31, thereby allowing the second region 32 to be formed thin. In addition, although the number of the wales of the first region 31 is the same as the number of the wales of the second region 32, the second region 32 can be formed to be narrower than the first region 31 which includes the tricot knitting yarn 41 and the chain knitting yarn 42, as described above.

The third region 33 (the tenth wale W10) of the tape main body portion 24 is formed in such a way that courses in which only the needle loop of the tricot knitting yarn 41 is provided and courses in which only folded-back part of the second forward weft in-laid yarn 45 is provided are alternately located in the wale direction. In other words, the third region 33 is formed by the wale in which the number of needle loops of the knitting yarn (tricot knitting yarn 41) is decreased to be smaller than the number of the needle loops in each of the wales of the second region 32, and in which the folded-back parts of the second forward weft in-laid yarn 45 do not intersect needle loops of the knitting yarn. Thus, a thickness of the third region 33 can be further decreased to be smaller than the thickness of the second region 32.

Note that in order to knit the fastener tape 23, it is required to knit the chain knitting yarn into the tenth wale W10 which is provided on an outermost edge of the fastener tape 23. On the other hand, if the chain knitting yarn is knitted into the wale on the outermost edge of the fastener tape 23, a reduction in stretchability and flexibility of the fastener tapes 23 is incurred. Thus, upon knitting the knitted fastener stringers 20 in the present embodiment, although the water-soluble temporary chain knitting yarn 48 is knitted into the tenth wale W10 of the outermost edge, the temporary chain knitting yarn 48 is dissolved in a dyeing process or the like conducted after knitting the knitted fastener stringers 20, thereby removing the temporary chain knitting yarn 48 from the tenth wale W10. In the case of the present embodiment, a water-soluble multifilament yarn constituted of polyvinyl alcohol is used for the temporary chain knitting yarn 48.

Accordingly, the third region 33 (the tenth wale W10) is formed by a coarse knitting structure whose number of threads is small, as compared with the first region 31 and the second region 32 (the fourth wale W4 to the ninth wale W9). Thus, for example, when the fastener tapes 23 are curved so as to be fitted along the rim main body portion 4 of the steering wheel 1, an interval in the third region 33 in the wale direction can be easily widened and narrowed, so that stretchability and flexibility of the knitted fastener stringers 20 can be enhanced.

In addition, in the knitted fastener stringers 20 finally obtained after dissolving the temporary chain knitting yarn 48 in the above-described dyeing process or the like, in the tape main body portion 24, the chain knitting yarn 42 is disposed only in the first region 31.

In the present embodiment, a nylon-based or a polyester-based multifilament yarn is used for each of the tricot knitting yarn 41, the chain knitting yarn 42, the first forward weft in-laid yarn 44, the second forward weft in-laid yarn 45, and the reverse weft in-laid yarn 46 by which the tape main body portion 24 is formed. Note that in the invention, a material of each of the yarns is not particularly limited and a material other than the above-described material may be used.

In the tape main body portion 24 in the present embodiment, the tricot knitting yarn 41 by which the needle loops are formed in the third region 33 has fineness smaller than fineness of the other tricot knitting yarns 41 by which the tape main body portion 24 is formed. As one specific example, the tricot knitting yarn 41 by which the needle loops are formed in the third region 33 has fineness of 84 decitex or more and 167 decitex or less, and the other tricot knitting yarns 41 which are provided in the tape main body portion 24 has fineness of 110 decitex or more and 220 decitex or less and fineness larger than the fineness which the tricot knitting yarn 41 of the third region 33 has. As described above, a thin yarn is used for the tricot knitting yarn 41 of the third region 33, thereby allowing the stretchability and the flexibility of the knitted fastener stringers 20 to be further effectively enhanced.

Of the chain knitting yarn 42 of the first region 31, the chain knitting yarns 42 which is located in the fourth wale W4 has fineness larger than fineness of the chain knitting yarns 42 which are located in the fifth wale W5 and the sixth wale W6. In addition, it is preferable that the chain knitting yarn 42 which is located in the fourth wale W4 has fineness larger than fineness of the tricot knitting yarns 41 which are located in the first region 31. As one specific example, the chain knitting yarn 42 located in the fourth wale W4 has fineness of 167 decitex or more and 278 decitex or less, the chain knitting yarns 42 located in the fifth wale W5 and the sixth wale W6 have fineness of 84 decitex or more and 167 decitex or less. As described above, the chain knitting yarn 42 located in the fourth wale W4 is made thicker than the chain knitting yarns 42 located in the fifth wale W5 and the sixth wale W6, thereby it is possible to inhibit a partial decrease in the thickness of the first region 31 on the fourth wale W4, where the needle loops of the tricot knitting yarn 41 are formed every other one course. In addition, a strength of the first region 31 can be enhanced.

In addition, in the tape main body portion 24, the first forward weft in-laid yarns 44 which are located only in the first region 31 have fineness larger than fineness of the second forward weft in-laid yarns 45 which are located in the first region 31, the second region 32, and the third region 33. As one specific example, the first forward weft in-laid yarns 44 have fineness of 110 decitex or more and 220 decitex or less, and the second forward weft in-laid yarns 45 have fineness of 84 decitex or more and 167 decitex or less and has fineness smaller than fineness of the first forward weft in-laid yarns 44. Thus, a strength of the first region 31 can be effectively enhanced.

The reverse weft in-laid yarn 46 which is laid in a part of the first region 31 has fineness larger than fineness of the second forward weft in-laid yarns 45. As one specific example, the reverse weft in-laid yarn 46 has fineness of 110 decitex or more and 220 decitex or less.

As illustrated in FIGS. 4 and 5, the element attachment portion 25 having the first wale W1 to the third wale W3 is knitted by using a chain knitting yarn 42 (0-1/1-0) which is located in the first wale W1; fixing chain knitting yarns 43 (0-1/1-0) which are located in the second wale W2 and the third wale W3; first forward weft in-laid yarns 44 (3-3/0-0) which are laid over the three wales in a zigzag manner; reverse weft in-laid yarns 46 (0-0/2-2) which are laid in over the two wales in a zigzag manner; and warp in-laid yarns 47 (1-1/0-0) which are laid in each of the wales, which are the first wale W1 to the third wale W3.

The chain knitting yarn 42 which is located in the first wale W1 of the element attachment portion 25 forms the ground texture of the fastener tape 23. The fixing chain knitting yarns 43 which are located in the second wale W2 and the third wale W3 form the ground texture of the fastener tape 23 by the needle loops, and fix the fastener elements 22 of the continuous element rows 21 to the fastener tapes 23 by sinker loops.

In the second wale W2 where the fixing chain knitting yarn 43 is located, folded-back parts of the first forward weft in-laid yarn 44 and folded-back parts of the reverse weft in-laid yarn 46 are located in such a way as to intersect in the same course with needle loops of the fixing chain knitting yarn 43. In addition, also in the third wale W3 where the fixing chain knitting yarn 43 is located, folded-back parts of the first forward weft in-laid yarn 44 and folded-back parts of the reverse weft in-laid yarn 46 are located in such a way as to intersect in the same course with needle loops of the fixing chain knitting yarn 43. Thus, displacement of positions of the fixing chain knitting yarns 43, which are knitted in the second wale W2 and the third wale W3, in a course direction can be prevented, and the fixing chain knitting yarns 43 can be stably retained in a predetermined position.

The warp in-laid yarn 47 is located in each of the wales which are the first wale W1 to the third wale W3. Thus, while flexibility of the element attachment portion 25 is ensured, the element attachment portion 25 is reinforced, and a tape configuration of the fastener tape 23 can be made stable. Note that in the present embodiment, the element attachment portion 25 may be knitted without using the warp in-laid yarn 47.

In the knitted fastener stringers 20 in the above-described present embodiment, the tape main body portion 24 of the fastener tape 23 is formed in such a way that thicknesses of the first region 31, the second region 32, and the third region 33 are decreased in a manner stepwise toward the outermost side edge portion. In addition, in a range in which functions of each of the first region 31, the second region 32, and the third region 33 of the tape main body portion 24 can be ensured respectively, the first region 31, the second region 32, and the third region 33 are formed in such a way as to make width dimensions of the regions small, thereby forming each of the fastener tapes 23 to be narrow as a whole.

Here, the narrowness of the fastener tape 23 is described by using numerical values as follows: in a plan view or a bottom view (for example, see FIG. 3) of the knitted fastener stringer 20 in the present embodiment, the fastener tape 23 is formed, for example, in such a way that a width dimension D1 of the whole fastener tape 23 (that is, a dimension D1 in a tape width direction from a tape side edge of one side on a side of the coupling head 22a in the fastener tape 23 to a tape side edge of the other side on a side opposite to the above-described side of the coupling head 22a) is equal to or less than 400% of a width dimension D2 of the fastener element 22 (that is, a dimension D2 in the tape width direction from a tip end of the coupling head 22a of each of the fastener elements 22 to a surface on a tape internal side of the connecting portion). In this case, in view of the functions of the first region 31, the second region 32, and the third region 33 of the tape main body portion 24, it is preferable that the width dimension D1 of the whole fastener tape 23 is equal to or greater than 350% of the width dimension D2 of each of the fastener elements 22.

In particular, it is preferable that the width dimension D1 of the whole fastener tape 23 is 9.00 mm or more and 10.00 mm or less. In this case, it is preferable that a width dimension D3 of the first region 31 in the tape main body portion 24 (that is, the width dimension D3 from the surface on the tape internal side of the connecting portion of each of the fastener elements 22 to a boundary part between the first region 31 and the second region 32 of the tape main body portion 24) is 0.55 mm or more and 0.70 mm or less (see FIG. 4).

It is preferable that a width dimension D4 of the second region 32 (that is, the width dimension D4 from the boundary part between the first region 31 and the second region 32 of the tape main body portion 24 to a boundary part between the second region 32 and the third region 33 of the tape main body portion 24) is 0.45 mm or more and 0.55 mm or less. It is preferable that a width dimension D5 of the third region 33 (that is, the width dimension D5 from the boundary part between the second region 32 and the third region 33 of the tape main body portion 24 to the other tape side edge of each of the fastener tapes 23) is 0.25 mm or more and 0.35 mm or less.

The slide fastener 10 in the present embodiment having the right and left knitted fastener stringers 20 is attached to internal surfaces of the first side edge portion 6a and the second side edge portion 6b of the cover main body portion 6 by sewing, as described above. In this case, the first region 31 of each of the fastener tapes 23 of the knitted fastener stringers 20 and the first side edge portion 6a or the second side edge portion 6b of the cover main body portion 6 are superposed and the superposed part is sewn. Thus, as illustrated in FIG. 2, the first region 31 of each of the right and left fastener tapes 23 is sewn (fixed) by the sewing portions 7 of the sewing threads in a state in which the first region 31 of each of the right and left fastener tapes 23 and the first side edge portion 6a and the second side edge portion 6b of the cover main body portion 6 are respectively superposed.

Thus, the cover member 5 for which the slide fastener 10 is provided is manufactured. At this time, since the sewing portions 7 which sew the knitted fastener stringers 20 to the cover member 5 is formed in such a way as to pierce each of the first side edge portion 6a and the second side edge portion 6b of the cover main body portion 6, stitches of the sewing portions 7 appear in a linear manner on an external surface of the cover main body portion 6.

The cover member 5 in the present embodiment to which the pair of right and left knitted fastener stringers 20 are attached is thereafter attached to the rim main body portion 4 of the steering wheel 1.

A method of attaching the cover member 5 to the rim main body portion 4 will be briefly descried as follows: first, the cover member 5 is covered on the rim main body portion 4 of the steering wheel 1 in such a way as to be wound around the rim main body portion 4, and one end part of the continuous element rows 21 provided for the right and left knitted fastener stringers 20 is inserted into an element guide passage of the slider body 12.

Subsequently, by pulling the pulling handle, not illustrated, of the slider 11, the slider 11 is slid along the rim portion 2 toward a direction (forward direction) in which the right and left continuous element rows 21 are coupled. Thus, while the first side edge portion 6a and the second side edge portion 6b of the cover main body portion 6 are abutted, the right and left continuous element rows 21 can be coupled.

Thus, as illustrated in FIG. 2, the right and left knitted fastener stringers 20 with the continuous element rows 21 coupled are retained between the rim main body portion 4 and the cover member 5. In addition, in a state in which the continuous element rows 21 are coupled, the right and left knitted fastener stringers 20 are disposed in a such way that parts extending in a tape length direction are, for example, as indicated by an arrow 51 in FIG. 1, curved along the circular-arc rim portion 2 toward a side on which the continuous element rows 21 are not provided in the tape front-back direction. Furthermore, the right and left knitted fastener stringers 20 are disposed in a such way that parts extending in the tape width direction are, for example, as indicated by an arrow 52 in FIG. 2, curved along a substantially circular cross section, which is orthogonal to the circumferential direction of the rim portion 2 toward a side on which the continuous element rows 21 are provided in the tape front-back direction. In other words, the right and left knitted fastener stringers 20 are retained between the rim main body portion 4 and the cover member 5 in a complexly curved state in such a way as to be fitted along the external surface of the rim main body portion 4.

In addition, by sliding the slider 11 up to an end part (front end part) on a side of a direction, in which the right and left continuous element rows 21 are coupled, while the cover member 5 is wound on the rim main body portion 4, the right and left knitted fastener stringers 20 of the slide fastener 10 are closed and the cover member 5 can be attached to the rim main body portion 4. In this case, the first side edge portion 6a and the second side edge portion 6b of the cover main body portion 6 are retained in a state abutted by the closed slide fastener 10.

The above-described attachment work of the cover member 5 can be easily and stably conducted in a short time, for example, as compared with a case where the cover member is fixed by an adhesive or the like while the cover member is wound on the rim main body portion. Note that the slider 11 which couples the right and left continuous element rows 21 may be thereafter housed in a slider housing portion, not illustrated, which is provided for the steering wheel 1 or may be detached and removed from the continuous element rows 21 to retrieve the slider 11.

In addition, in the steering wheel 1 in the present embodiment, the slide fastener 10 is closed and the cover member 5 is attached to the rim main body portion 4, and thereafter, the cover member 5 is subjected to stitch processing in which zigzag stitches 8 are formed in such a way as to overstride between the abutted first side edge portion 6a and second side edge portion 6b of the cover main body portion 6 as illustrated in FIG. 1.

In this stitch processing, between the two linear-like sewing portions 7 formed when the knitted fastener stringers 20 are fixed to the cover member 5 by sewing, the zigzag stitches 8 are formed. In this case, the zigzag stitches 8 do not pierce the cover member 5, and by making the zigzag stitches 8 cross alternately the stitches of the right and left sewing portions 7 appearing on an external surface of the cover member 5, the zigzag stitches 8 are provided in such a way as to overstride between the abutted first side edge portion 6a and second side edge portion 6b of the cover main body portion 6. Thus, the zigzag stitches 8 can be easily formed and a work time of the stitch processing can be shortened.

The above-described zigzag stitches 8 are provided for the steering wheel 1, thereby allowing quality of appearance of the steering wheel 1 to be enhanced or a sense of luxury to be imparted to the steering wheel 1. The above-described processes are conducted, thereby manufacturing the steering wheel 1 in the present embodiment.

In the steering wheel 1 manufactured by using the cover member 5 in the present embodiment, the fastener tapes 23 of the knitted fastener stringers 20 which are attached to the cover member 5 are formed in such a way that the thicknesses of the first region 31, the second region 32, and the third region 33 of each tape main body portion 24 are decreased in the stepwise manner. Furthermore, the slide fastener 10 in the present embodiment is formed in such a way as to have the small chain thickness, as compared with a slide fastener having the conventional general knitted fastener stringers.

Thus, the thickness of the slide fastener 10 can be inhibited from standing out on the external surface of the cover member. In particular, in the present embodiment, the thickness of each of the fastener tapes 23 in the tape main body portion 24 is decreased in the stepwise manner toward the third region 33, and the third region 33 is formed thinnest. Thus, change in a thickness between the first region 31 and the second region 32 and change in a thickness between the second region 32 and the third region 33 in the tape main body portion 24 can be made small, and the step difference formed between the surface of the rim main body portion 4 and the outermost side edge portion of each of the right and left fastener tapes 23 can be made small. Accordingly, a recessed and projected shape (a shape including recessed parts and/or projected parts) which is attributable to the fastener tapes 23 can be effectively inhibited from being formed on the surface of the cover member 5.

In addition, in the case of the present embodiment, in the vicinity of a part where the first side edge portion 6a and the second side edge portion 6b of the cover main body portion 6 are abutted each other, as illustrated in FIG. 1, the linear-like stitches of the sewing portions 7 and the zigzag stitches 8 are formed, and the tape main body portion 24 of each of the knitted fastener stringers 20 is formed narrowly. Thus, for example, even if the recessed and projected shape attributable to the fastener tapes 23 appears small on the surface of the cover member 5, it is made possible to make the recessed and projected shape hardly conspicuous by the linear-like stitches of the sewing portions 7 and the zigzag stitches 8 as described above.

Furthermore, in the present embodiment, the width dimension of the tape main body portion 24 of each of the fastener tapes 23 is formed significantly smaller than that of the conventional general knitted fastener stringer. For example, in order to dispose the knitted fastener stringers 20 along the external surface of the rim main body portion 4 with good appearance, it is required to complexly curve the knitted fastener stringers 20 so as to correspond to the external surface of the rim main body portion 4. In this case, by making the width dimension of the tape main body portion 24 small as described above, when the cover member 5 is attached to the rim main body portion 4 and the knitted fastener stringers 20 are retained between the cover member 5 and the rim main body portion 4, flexibility and stretchability of the fastener tapes 23, which are required to complexly curve the knitted fastener stringers 20, can be made comparatively small.

Moreover, in the present embodiment, stretchability and flexibility of the knitted fastener stringers 20 (in particular, stretchability and flexibility of the outermost side edge portion of each of the fastener tapes 23 and in the vicinity thereof) are greatly enhanced. In other words, as described above, the third region 33 of each of the fastener tapes 23 is formed thinnest, and the tenth wale W10 of the third region 33 is formed in such a way that the course in which only the needle loops of the tricot knitting yarn 41 are provided and the course in which only the folded-back parts of the second forward weft in-laid yarn 45 are provided are alternately located in the wale direction. Furthermore, the second region 32 of the tape main body portion 24, which neighbors the third region 33, is formed by the tricot knitting yarns 41 which are excellent in stretchability in the wale direction and the second forward weft in-laid yarns 45. As a result, the outermost side edge portion of the each of the fastener tapes 23 and the vicinity thereof can have high stretchability and high flexibility.

Thus, even when the slide fastener 10 in the present embodiment is retained between the rim main body portion 4 and the cover member 5 in a state in which the slide fastener 10 is complexly curved in such a way as to be disposed along the curved external surface of the rim main body portion 4, the fastener tapes 23 (in particular, the outermost side edge portions of the fastener tapes 23 and the vicinity thereof) can be made to be easily fitted along the external surface of the rim main body portion 4. Thus, causing wave-shaped creases in the fastener tapes 23 and partially bending of the fastener tapes 23 can be inhibited. As a result, the cover member 5 can be made to hardly float up from the external surface of the rim main body portion 4. In addition, the recessed and projected shape can be inhibited from being formed on the surface of the cover member 5 due to the creases, the bending, and the like of the fastener tapes 23.

As described above, the cover member 5 to which the slide fastener 10 in the present embodiment is attached is used, thereby allowing attachment work of the cover member 5 to the steering wheel 1 to be easily conducted in a short time. In addition, the recessed and projected shape such as the step difference, the floating-up, and the like, which are attributable to the knitted fastener stringers 20, is hardly formed on the surface of the cover member 5 which is attached to the rim main body portion 4, so that the surface of the cover member 5 can be smoothly finished. Thus, there can be provided the steering wheel 1 which has excellent quality of appearance and from which a favorable touch (hand feeling) can be obtained when the rim portion 2 is held.

Note that the invention is not limited to a configuration of the above-described embodiment and a variety of modifications can be made as long as each of the modifications have substantially the same configuration as the configuration of the invention and exhibits operation and effect similar to those of the invention. For example, in the above-described embodiment, as illustrated in FIG. 2, the slide fastener 10 including the knitted fastener stringers 20 is attached to the cover member 5 in such a way that the right and left continuous element rows 21 are located on the side of the rim main body portion 4 with respect to the ground textures of the fastener tapes 23, in order for the slide fastener 10 to be used as the back side use type.

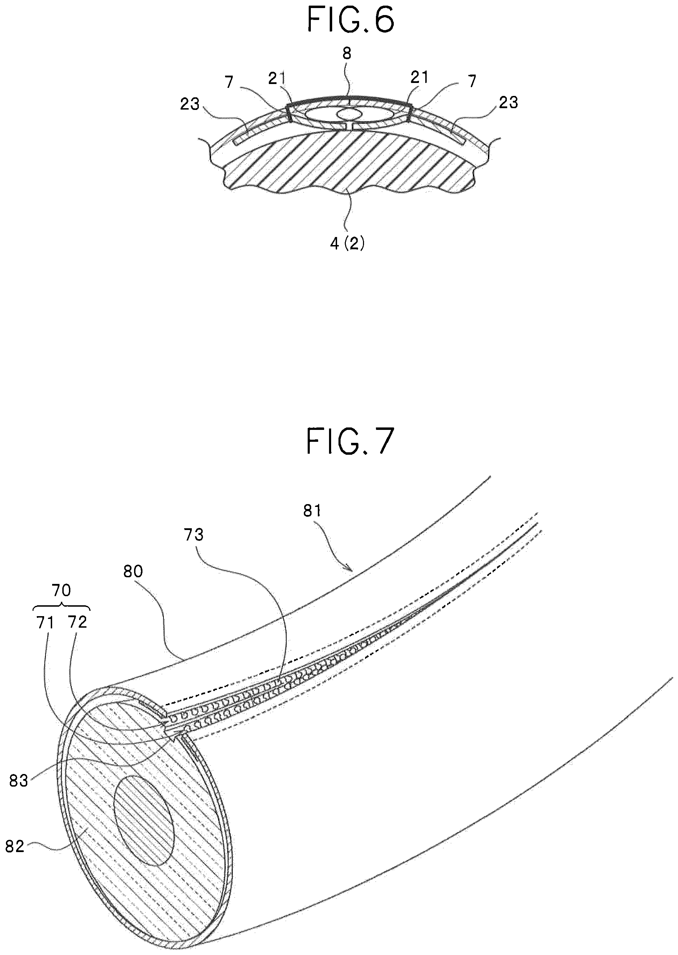

However, in the invention, for example, as illustrated in FIG. 6 as a modified example, the slide fastener 10 including the knitted fastener stringers 20 may be attached to the cover member 5 in such a way that the right and left continuous element rows 21 are located on a side of the cover member 5 with respect to the ground textures of the fastener tapes 23. As described above, even in a case where the slide fastener 10 is attached to the cover member 5 as an ordinary type slide fastener 10, effect similar to that of the above-described embodiment can be obtained.

## Claims

1. A knitted fastener stringer including:
a fastener tape (23) which is formed by a knitting structure; and
(23), a continuous element row (21) which is fixed upon knitting the fastener tape
the knitted fastener stringer (20) being **characterized in that**:
the fastener tape (23) has a tape main body portion (24) and an element attachment portion (25) which extends in a tape width direction from a side edge of the tape main body portion (24) and in which the continuous element row (21) is fixed,
the tape main body portion (24) has, in the tape width direction, a first region (31) which neighbors the element attachment portion (25), a second region (32) which neighbors the first region (31), and a third region (33) which neighbors the second region (32) and forms a side edge portion on a side opposite to a side of the element attachment portion (25) of the tape main body portion (24),
the second region (32) is formed thinner than the first region (31), and
the third region (33) is formed thinner than the second region (32).

2. The knitted fastener stringer according to claim 1, being **characterized in that**:
a dimension (D3) of the first region (31) in the tape width direction is equal to or less than a half of a dimension of a whole of the tape main body portion (24) in the tape width direction.

3. The knitted fastener stringer according to claim 1 or 2, being **characterized in that**:
a dimension (D4) of the second region (32) in the tape width direction is equal to or less than the dimension (D3) of the first region (31) in the tape width direction.

4. The knitted fastener stringer according to any one of claims 1 to 3, being **characterized in that**:
a dimension (D1) of a whole of the fastener tape (23) in the tape width direction is equal to or less than 400% of a dimension (D2) of each of fastener elements (22) forming the continuous element row (21) in the tape width direction.

5. The knitted fastener stringer according to any one of claims 1 to 4, being **characterized in that**:
each of wales (W7, W8, and W9) which form the second region (32) has one needle loop of a knitting yarn in each of courses,
each of wales (W4, W5, and W6) which form the first region (31) is formed in such a way that a number of needle loops of the knitting yarn of each wale (W4, W5, and W6) is larger than a number of the needle loops of each of the wales (W7, W8, and W9) which form the second region (32), and
a wale (W10) which forms the third region (33) is formed in such a way that a number of needle loops of the knitting yarn of the wale (W10) is smaller than the number of the needle loops of each of the wales (W7, W8, and W9) which form the second region (32).

6. The knitted fastener stringer according to any one of claims 1 to 5, being **characterized in that**:
the first region (31) is formed by the wales having needle loops of a chain knitting yarn (42) and needle loops of a tricot knitting yarn (41),
the second region (32) is formed by the wales having needle loops of the tricot knitting yarn (41) in each of the courses, and
the third region (33) is formed by the wale, in which courses in which only needle loops of the tricot knitting yarn (41) are provided and courses in which only folded-back parts of a weft in-laid yarn (45) are provided are alternately located.

7. A cover member for a steering wheel, being **characterized in that**:
the knitted fastener stringers (20) according to any one of claims 1 to 6 are attached along facing edge portions (6a and 6b) facing each other upon attaching the cover member to a steering wheel (1).

8. The cover member for a steering wheel according to claim 7, being **characterized in that**:
the first region (31) of each of a pair of the knitted fastener stringers (20) is sewn by a sewing portion (7) in a state in which the first region (31) of each of the pair of the knitted fastener stringers (20) and each of the facing edge portions (6a and 6b) facing each other of the cover member (5) are superposed respectively,
by closing the pair of the knitted fastener stringers, the facing edge portions (6a and 6b) are abutted, and
stitches (8) are provided in such a way as to overstride the abutted facing edge portions (6a and 6b).
